# EUROPEAN PATENT APPLICATION

(11) **EP 1 986 305 A2**
(43) Date of publication of application: **29.10.2008**
(21) Application number: 08004725.1
(22) Date of filing: 13.03.2008
(51) Int. Cl.: H02J 7/14

(54) **Bicycle power supply for Bicycle electrical system**

(30) Priority: 27.04.2007 JP 2007118306
(71) Applicant: SHIMANO INC., Osaka 590-8577 (JP)
(72) Inventor: Kitamura, Satoshi, Sakai-City Osaka 590-8577 (JP)
(74) Representative: Grosse - Schumacher - Knauer - von Hirschhausen

(57) **Abstract**

A bicycle power supply (14) is configured to be charged by electrical power generated by a hub dynamo (10). The bicycle power supply (14) has a plurality of accumulator elements (51a,51b,51c), a connection switching part (52), a voltage detection part (53) and a switch control part (54). The accumulator elements (51a,51b,51c) are disposed between first and second ends (10a,10b) of the hub dynamo. The connection switching part (52) switches between a first state and a second state, in which the accumulator elements (51a,51b,51c), are connected in series and parallel, respectively, to the hub dynamo (10). The voltage detection part (53) detects the voltage supplied by the hub dynamo (10). The switch control part (54) controls the connection switching part (52) to establish the first state when the voltage detected by the voltage detection part (53) is at or above a prescribed voltage, and controls the connection switching part (52) to establish the second state when the prescribed voltage is not reached.

## Description

### CROSS-REFERENCE TO RELATED APPLICATIONS

This application claims priority under 35 U.S.C. § 119 to Japanese Patent Application No. 2007-118306 on April 27, 2007. The entire disclosure of Japanese Patent Application No. 2007-118306 is hereby incorporated herein by reference.

### BACKGROUND OF THE INVENTION

### Field of the Invention

The present invention relates to a bicycle power supply for charging electricity generated by an alternating-current generator for a bicycle, and an electrical system for a bicycle in which the bicycle power supply is used.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. Recently, bicycles have been provided with a variety of electrical components and devices.

Dynamos (alternating-current generators for bicycles) are mounted on bicycles for illuminating headlights or other lamps. The electrical power generated by the dynamo is typically directly supplied to the lamps. In addition to lamps, the latest bicycles have, actuators for shifting electrically powered transmissions, actuators for adjusting the damping strength of electrically powered suspensions, cycle computer indicator backlights (hereafter, such devices are referred to as electrically powered units), and other dynamo-driven devices. These electrically powered units primarily require direct current. Conventionally, therefore, alternating-current power generated by the dynamo is commutated, temporarily stored in a large capacity capacitor or other such accumulator element, and then supplied to the electrically powered units. The alternating-current power output by the dynamo depends on the speed of the bicycle, and therefore varies dramatically. Consequently, at low speeds or at night and other times when power is consumed to illuminate the lamps, the necessary voltage may be impossible to supply to the electrically powered units, the accumulator elements cannot be charged, or other such situations may occur.

Accordingly, in bicycles having such electrically powered units, a demand has arisen for a power supply capable of supplying a stable drive voltage. In order to supply a stable drive voltage, the accumulator elements must be charged with a stable voltage. Units that are conventionally known are composed of half wave voltage-doubling rectifier circuits and designed to yield stable electrical power even at lowered voltages in order for accumulator elements to be charged with a stable voltage (e.g., refer to Japanese Laid-Open Patent Application No. 2004-140938). Conventional power supplies are designed to perform a switch control each half cycle, and allow a stable voltage to be charged.

In view of the above, it will be apparent to those skilled in the art from this disclosure that there exists a need for an improved bicycle shifter. This invention addresses this need in the art as well as other needs, which will become apparent to those skilled in the art from this disclosure.

### SUMMARY OF THE INVENTION

It has been discover that in a conventional configuration, as discussed above, the accumulator elements must be charged using a voltage that is twice what is output by the dynamo. Therefore, the accumulator elements need to have strong resistance characteristics/high ripple resistance. The accumulator elements must also be provided with an on-off circuit for preventing overvoltages when the lamp is illuminated by the output. Concerns are accordingly presented that the power supply will have a large, complex structure.

One object of the present invention is to create a bicycle power supply having a simple and compact configuration that is able to be charged by a stable voltage, and providing an electrical system using same.

According to a first aspect, a bicycle power supply is provided that is capable of being charged by electrical power generated by an alternating-current generator of a bicycle. The bicycle power supply basically comprises a first alternating-current connection, a second alternating-current connection, a plurality of accumulator elements, a connection switching part, a voltage detection part and a switching control part. The accumulator elements are electrically connected between the first and second alternating-current connections to receive an alternating-current. The connection switching part is arranged to switch between a first state, in which the accumulator elements are serially connected with respect to the first and second alternating-current connections, and a second state, in which the accumulator elements are connected in parallel with respect to the first and second configured alternating-current connections. The voltage detection part is arranged to detect voltage supplied to the bicycle power supply via the first and second alternating-current connections. The switching control part controls the connection switching part to establish the first state when the voltage detected by the voltage detection part is at a prescribed voltage or above, and controls the connection switching part to establish the second state when the prescribed voltage is not reached.

In the power supply, the voltage detection part detects the voltage of the electrical power output from the alternating-current generator, and, when the detected voltage is at or above the prescribed voltage, the switching control part switches the connection switching part the first state, and a serial connection is established with the plurality of accumulator elements. As a result, the serially connected plurality of accumulator elements will be charged by the generator at suitable timing using a voltage that is substantially equivalent to 1 divided by the number of accumulator elements, and a voltage that is the sum of all of the charged voltages can be output. Accordingly, charging can be accomplished using a lower voltage than the generated voltage, and accumulator elements having a high withstand voltage are rendered unnecessary. When the voltage falls below a prescribed level, the connection switching part switches to the second state, and a parallel connection is established with the plurality of accumulator elements. As a result, the accumulator elements can be charged even at a voltage that is equivalent to 1 divided by the number of accumulator elements when the accumulator elements are serially connected. Specifically, at low speeds or at night and other times when power is consumed to illuminate the lamps, the parallel connection allows the accumulator elements to be reliably charged even when the amount of electrical power supplied by the power supply is small. Conversely, even at high speeds and other such conditions when a large amount of power is supplied by the generator, the serial connection allows the accumulator elements to be reliably charged without requiring an overvoltage prevention circuit or the like. When charging and discharging are repeated in a serially connected state only, as is conventionally performed, minor variations in the characteristics of each accumulator element can cause the accumulator voltage to gradually develop a bias. However, when a parallel connection has been established, the voltage is the same for each accumulator element; therefore, it becomes unnecessary to utilize a voltage monitoring circuit to ensure that the withstand voltage of the accumulator elements is not exceeded when the voltage develops a bias. When the voltage supplied by the generator reaches or exceeds the prescribed voltage, the plurality of accumulator elements will be connected in series, and when the prescribed voltage is not reached the accumulator elements will be connected in parallel; therefore, it is sufficient just to provide a simple connection switching part and switching control part. Even when the supplied voltage drops, charging can be accomplished through a parallel connection at low voltages as well; therefore, a half wave voltage-doubling rectifier circuit is not required to increase the voltage. The accumulator elements can accordingly be charged by a stable voltage even when the voltage supplied by the generator decreases, and a stable voltage charge can be accomplished using a simple, compact configuration.

According to a second aspect, the bicycle power supply according to the first aspect is further configured such that the accumulator elements includes first and second accumulator elements electrically connected between the first and second alternating-current connections. The connection switching part includes a first switch element, a second switch element and a third switch element. The first switch element is connected to the first alternating-current connection and connected to a first end of the first accumulator element. The second switch element is connected to the second alternating-current connection and connected to a second end of the second accumulator element. The third switch element is connected to the first accumulator element and the second accumulator element. The switching control part is configured to switch the first and second switch elements off and the third switch element on to establish the first state, and configured to switch the first and second switch elements on and the third switch element off to establish the second state. In this case, controlling the on and off state of the three switch elements with regard to the two accumulator elements enables the connection state of the accumulator elements to be readily switched.

According to a third aspect, the bicycle power supply according to the first aspect is further configured such that the accumulator elements includes a plurality of accumulator elements electrically connected between the first and second alternating-current connections, with a total number of the accumulator elements being equal to N, where N is an integer of 3 or greater. The connection switching part includes a plurality of first switch elements, a plurality of second switch elements and a plurality of third switch elements. The first switch elements are connected to the first alternating-current connection and connected to first ends of a first to an (N-1)th of the accumulator elements, respectively. The second switch elements are connected to the second alternating-current connection and connected to second ends of a second to an Nth of the accumulator elements, respectively. The third switch elements are connected separately to the first ends of the first to the (N-1)th of the accumulator elements and connected to the second ends of the second to the Nth of the accumulator elements with a total number of the third switch elements being N-1. The switching control part is configured to switch all of the first and second switch elements off and all of the third switch element on to establish the first state, and configured to switch all of the first and second switch elements on and all of the third switch element off to establish the second state. In this case, controlling the on and off state of the first through third switch elements of (N-1) switch elements enables the connection state of the accumulator elements to be readily switched.

According to a fourth aspect, the bicycle power supply according to the first aspect is further configured such that the accumulator elements are capacitors. In this case, an electrical double layer capacitor or other large capacity capacitor is used, whereby power can be stored rapidly and reliably.

According to a fifth aspect, a bicycle electrical system is provided that is equipped with the bicycle power supply according to the first through fourth aspects. The bicycle electrical system includes an alternating-current generator configured to be mounted to a bicycle, and an electrical device powered by electrical power received from the bicycle power supply. In this case, stable voltage can be supplied from the power supply without being affected by the lamps being illuminated, the running state of the bicycle, or other such conditions. Therefore, even if the voltage supplied by the generator decreases, malfunctioning of the power supply can be minimized, and the power supply can be stably operated.

According to a sixth aspect, the bicycle electrical system according to the fifth aspect is further configured such that the electrical device includes an electrically powered transmission component for shifting gears of the bicycle. In this case, the electrically powered transmission can be stably operated without being affected by the lamps or other lighting device being illuminated, the running state of the bicycle, or other such conditions.

According to a seventh aspect, the bicycle electrical system according to the fifth and sixth aspects is further configured such that the electrical device includes an electrically powered suspension for the bicycle. In this case, the electrically powered suspension can be stably operated without being affected by the lamps or other lighting device being illuminated, the running state of the bicycle, or other such conditions.

According to an eighth aspect, the bicycle electrical system according to the fifth through seventh aspects further comprises a bicycle lighting device connected to the alternating-current generator in parallel with the electrical device. In this case, even when the bicycle lighting device is connected, the electrical device can be operated stably and without being affected by a decrease in voltage when the lighting device is illuminated.

According to the present invention, when the voltage supplied by the generator reaches or exceeds the prescribed voltage, the plurality of accumulator elements will be connected in series, and when the prescribed voltage is not reached the accumulator elements will be connected in parallel; therefore, it is sufficient just to provide a simple connection switching part and switching control part. Even when the supplied voltage drops, charging can be accomplished through a parallel connection at low voltages as well; therefore, a half wave voltage-doubling rectifier circuit is not required to increase the voltage. The accumulator elements can accordingly be charged by a stable voltage even when the voltage supplied by the generator decreases, and a stable voltage charge can be accomplished using a simple, compact configuration.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
- Figure 1: is a side elevational view of a bicycle is illustrated with a bicycle electrical system having a bicycle power supply in accordance with one embodiment;
- Figure 2: is an enlarged perspective view of the handle part of the bicycle shown in Figure 1;
- Figure 3: is a block diagram showing the control configuration of the electrical system of the bicycle shown in Figure 1;
- Figure 4: is a partial block diagram of Figure 3 showing the direction of current when the accumulator elements of the power supply are connected in series;
- Figure 5: is a partial block diagram of Figure 3 showing the direction of current when the accumulator elements of the power supply are connected in parallel;
- Figure 6: is a partial block diagram showing another embodiment, corresponding to a part of Figure 3; and
- Figure 7: is a partial block diagram showing yet another embodiment, corresponding to a part of Figure 3.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

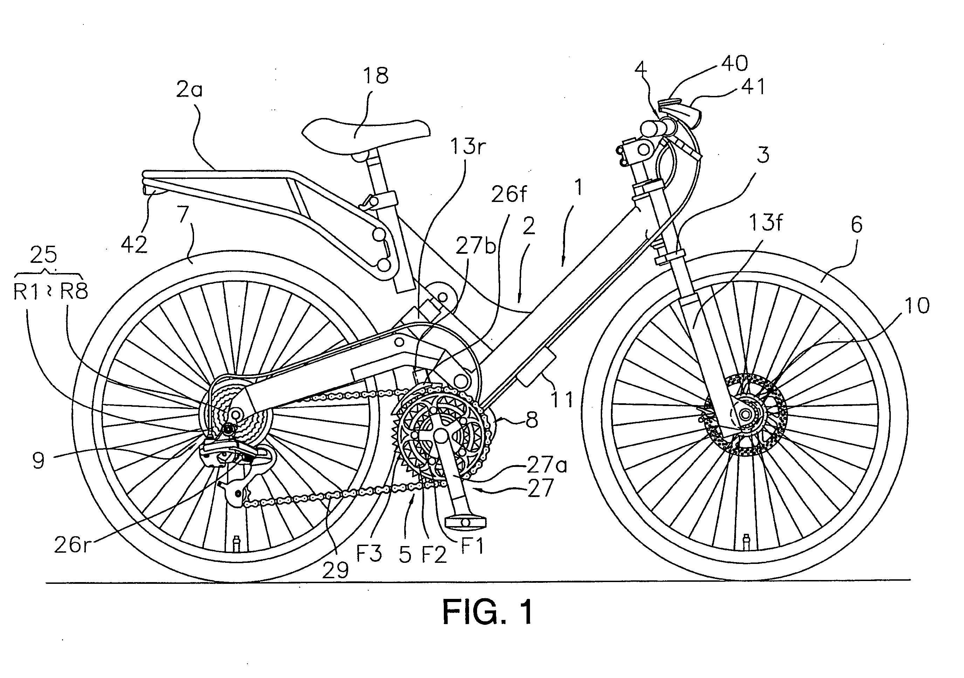

Figure 1 shows a bicycle employing one embodiment of the present invention is a mountain bicycle. The mountain bicycle is equipped with front and rear electrically powered suspensions, which are examples of electrical devices for a bicycle. The bicycle includes a frame 1 with a frame body 2, a front fork 3 and a handle part 4. A drive part 5 is installed on the frame body 2. A front wheel 6 is mounted on a front fork 3, while a rear wheel 7 is mounted on the rear of the frame body 2. The drive part 5 includes front and rear electrically powered transmission components 8 and 9, which are examples of electrical device for a bicycle. The front wheel 6 includes a hub dynamo 10. The hub dynamo 10 is one example of an alternating-current generator for use in bicycles. The transmission components 8 and 9 and the hub dynamo 10 form part of a bicycle electrical system 11. The frame body 2 is equipped with a rear suspension 13r, while the front fork 3 is equipped with a front suspension 13f. The bicycle electrical system 11 further includes a bicycle power supply 14 according to one embodiment. The power supply 14 serves as the power source for the front and rear suspensions 13f and 13r and the electrically powered transmissions 8 and 9, and is mounted on the lower central section of the frame body 2..

The frame body 2 of the frame 1 is manufactured by welding piping having a deformed square profile. All parts including a seat 18, a rear platform 2a, and the drive unit 5, are attached to the frame body 2. The front fork 3 is pivotally mounted about a shaft that is slanted at the front of the frame body 2. A tail-light 42 is an example of a bicycle lighting device, which is attached to the rear end of the rear platform 2a.

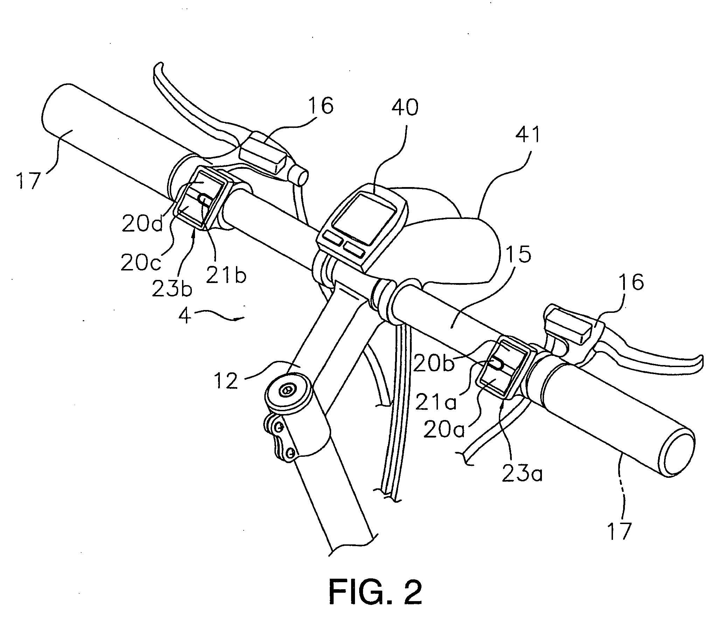

The handle part 4 comprises a handle stem 12 fixed to the upper part of the front fork 3, and a handlebar 15 fixed to the handle stem 12, as shown in Figure 2. A brake lever 16 and a grip 17 are mounted on either end of the handlebar 15. Switch units 23a and 23b, which perform the manual gear-shifting operation of the electrically powered transmissions 8 and 9, are mounted inside the mounting area of the brake lever 16.

The switch unit 23a comprises a pair of rear gearshift switches 20a and 20b and an operating switch 21 a. The rear gearshift switches 20a and 20b perform a manual gear-shifting operation of the rear electrically powered transmission 9. The operating switch 21 a switches the operation mode between automatic and manual gear-shifting modes. The gearshift switch 20a is a switch for shifting an electrically powered rear derailleur 26r (described hereunder) incrementally downward when manual gearshift mode has been established. The gearshift switch 20b is used for incrementally shifting the electrical real derailleur 26r upward.

The switch unit 23b comprises a pair of front gearshift switches 20c and 20d and an operating switch 21 b. The front gearshift switches 20c and 20d perform a manual gear-shifting operation of the front electrically powered transmission 8. The operating switch 21 b switches the operation mode for manually switching the suspensions 13f and 13r between hard and soft. The gearshift switch 20c is a switch for shifting an electrically powered front derailleur 26f (described hereunder) incrementally downward when manual gearshift mode has been established. The gearshift switch 20d is used for incrementally shifting the electrical front derailleur 26f upward.

A headlight 41 is an example of a bicycle lighting device. The headlight 41 is mounted on the central part of the handlebar 15. The headlight 41 can be equipped with a cycle computer 40 that can display travel speed, distance traveled, gearshift position, and the like.

The drive unit 5 further comprises a crank 27 provided to a lower part (hanger) of the frame body 2. The front electrically powered transmission 8 comprises three sprockets F1 to F3 mounted on the crank 27, and the electrical front derailleur 26f, which is mounted on the frame body 2. The rear electrically powered transmission 9 comprises a multistage gear 25 and the electrical rear derailleur 26r. The multistage gear 25 is mounted on the rear hub of the rear wheel 7 and has, e.g., eight sprockets R1 to R8. The electrical rear derailleur 26r is mounted on the rear of the frame body 2. The crank 27 comprises a gear crank 27a upon which are mounted the three sprockets F1 to F3, and a left crank 27b. The drive unit 5 further comprises a chain 29 wound around the sprockets F1 to F3 and R1 to R8 of the gear crank 27a and the multistage gear 25, respectively. The electrically powered derailleurs 26f and 26r accommodate actuators for actuating the derailleurs (motors, solenoids, or the like), and actuator control circuits.

The number of teeth in the front sprockets F1 to F3 increases in order from sprocket F1, which has the fewest teeth, and sprocket F3, which has the most teeth, is disposed on the outermost side. The number of teeth in the rear sprockets R1 to R8 decreases in order from sprocket R1, which has the most teeth, and sprocket R8, which has the fewest teeth, is disposed on the outermost side. In Figure 1, the exact number of sprockets R1 to R8 is not shown in order to simplify the drawing.

A rotation detection device (not shown) for detecting the rotation of the crank 27 is mounted on the rotational center of the left crank 27b side. The rotation detection device is provided to ensure that when an external transmission is used, the shifting of gears is performed only when the crank 27 is rotating, since shifting cannot be done when the crank 27 is not rotating.

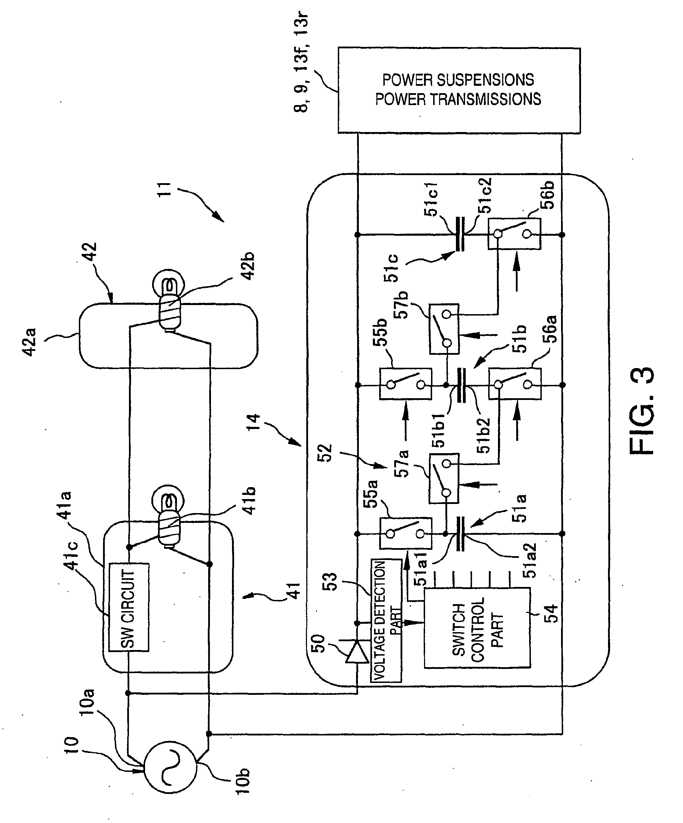

As shown in Figure 3, the electrical system 11 includes the power supply 14, the headlight 41, the tail-light 42, the front and rear electrically powered transmissions 8 and 9, and the electrically powered suspensions 13f and 13r.

The power supply 14 can be charged by the electrical power generated by the hub dynamo 10; and the front and rear electrically powered transmissions 8 and 9, and the front and rear electrically powered suspensions 13f and 13r are actuated by the charged power. The headlight 41, the tail-light 42 and the power supply 14 are connected in parallel to the hub dynamo 10. Alternating-current power is supplied to these components at a voltage corresponding to the rotation of the front wheel 6.

As shown in Figure 3, the headlight 41 comprises a lamp case 41 a able to be mounted on the handlebar 15 (Figure 2), a switch circuit 41 c housed within the lamp case 41 a, and a light bulb 41 b that is turned on and off by the switch circuit 41 c. The switch circuit 41 c turns on the light bulb 41 b when the degree of brightness around the bicycle falls below a prescribed intensity, and turns off the light bulb 41 b when the brightness is of or greater than the prescribed intensity.

The tail-light 42 is connected to the headlight 41. The tail-light 42 comprises a tail-light case 42a able to be mounted on the rear platform 2a (Figure 1), and a light bulb 42b housed in the tail-light case 42a. The tail-light 42 is also turned on and off by the switch circuit 41 c depending on the intensity of the surrounding brightness.

The power supply 14 is disposed between the hub dynamo 10, the electrically powered transmissions 8 and 9, and the suspensions 13f and 13r. The power supply 14 has a first alternating-current connection (wire) connected to a first end 10a of the hub dynamo 10 and a second alternating-current connection (wire) connected to a second end 10b of the hub dynamo 10. The power supply 14 includes a diode 50, first through third accumulator elements 51 a to 51 c, a connection switching part 52, a voltage detection part 53 and a switch control part 54. The diode 50 is connected to the first end 10a of the hub dynamo 10. The first through third accumulator elements 51 a to 51 c are disposed between the first end 10a and the second end 10b of the hub dynamo 10 via the diode 50. The connection switching part 52 is configured to switch the first through third accumulator elements 51 a to 51 c between a first state of being connected in series to the hub dynamo 10, and a second state of being connected in parallel to the hub dynamo 10. The voltage detection part 53 is configured to detect the voltage supplied by the hub dynamo 10. The switch control part 54 is an example of a switching control part. The switch control part 54 is configured to move the connection switching part 52 to the first state when the voltage detected by the voltage detection part is at or above a prescribed voltage (for example, 6 volts), and to the second state when the prescribed voltage is not reached.

The diode 50 only allows the passage of half-waves output from the first end 10a of the dynamo 10, and does not allow the passage of the remaining half-waves output from the second end 10b.

The first through third accumulator elements 51 a to 51 c are connected in parallel to the first end 10a and the second end 10b of the hub dynamo 10. The accumulator elements 51 a to 51 c, which are electrical double layer capacitors or other large-capacity capacitors, can store commutated electrical power rapidly yet reliably. The first through third accumulator elements 51 a to 51 c do not readily store stable electrical power when the voltage is below two volts.

The connection switching part 52 includes two first switch elements 55a and 55b, two second switch elements 56a and 56b and two third switch elements 57a and 57b. The first switch elements 55a and 55b are respectively connected to first ends 51 a1 and 51 b1 of the first and second accumulator elements 51 a and 51 b, and to the first end 10a of the hub dynamo 10. The second switch elements 56a and 56b are connected respectively to second ends 51 b2 and 51 c2 of the second and third accumulator elements 51 b and 51 c, and to the second end 10b of the hub dynamo 10. The third switch elements 57a and 57b are connected respectively to the second ends 51 b2 and 51 c2 of the second and third accumulator elements 51 b and 51 c, and to the first ends 51 a1 and 51 b1 of the first and second accumulator elements 51 a and 51 b. The third switch element 57a is connected to the first end 51 a1 of the first accumulator element 51 a, and the second end 51 b2 of the second accumulator element 51 b. The third switch element 57b is connected to the first end 51 b1 of the second accumulator element 51 b, and the second end 51 c2 of the third accumulator element 51 c. An FET (field-effect transistor) or another semiconductor switch element can be used for the switch elements.

The voltage detection part 53 smoothes the output of the diode 50, converts the result to a digital value, and outputs the resulting value to the switch control part 54.

The switch control part 54 comprises a microcomputer having a CPU, I/O interfaces, and memory; and controls the connection switching part 52 according to the voltage detected by the voltage detection part 53. Specifically, when the voltage detected by the voltage detection part 53 is at a prescribed level or above, the first switch elements 55a and 55b and the second switch elements 56a and 56b are turned off, the third switch elements 57a and 57b are turned on, and the first state is established. When the prescribed voltage is not reached, the first and second switch elements 55a, 55b, 56a and 56b are turned on, the third switch elements 57a and 57b are turned off, and the second state is established.

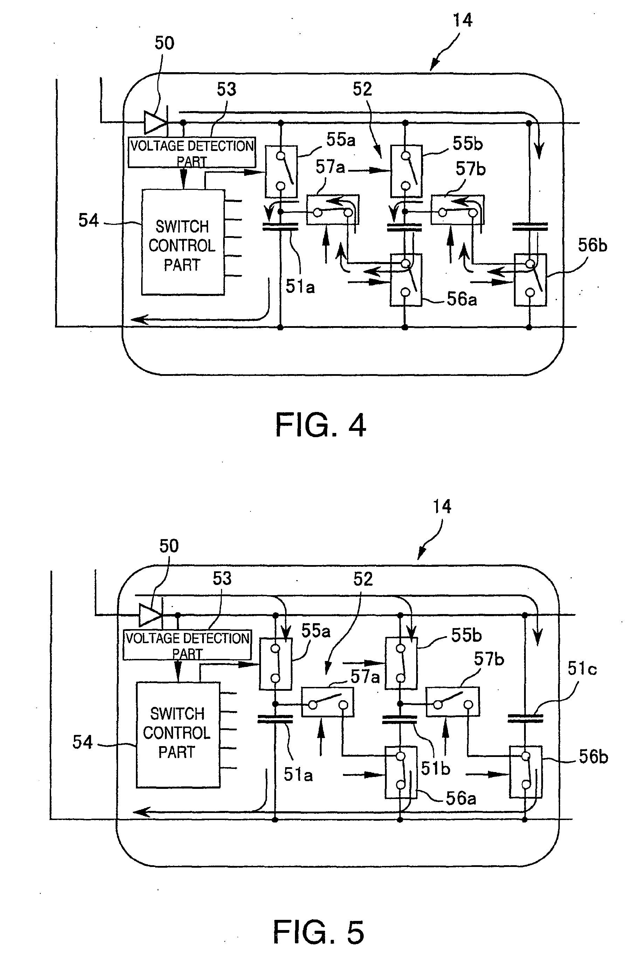

A description of the operation for controlling the switch control part 54 follows. As shown in Figure 4, the switch control part 54 controls the connection switching part 52 into the first state when the bicycle begins to move, the hub dynamo 10 starts to generate electricity, and the voltage detection part 53 detects a voltage that is equal to or greater than the prescribed level. In the first state, the first and second switch elements 55a, 55b, 56a and 56b are turned off, the third switch elements 57a and 57b are turned on, and a serial connection is established with the first through third accumulator elements 51 a to 51 c. When a serial connection has been established, a current is output from the hub dynamo 10 to the three serially connected accumulator elements 51 a to 51 c in the direction of flow shown by the arrows in Figure 4, and each of the accumulator elements 51 a to 51 c will be charged in a suitable timing with electrical power of a voltage that is substantially a third of the commutated voltage. A voltage that is the sum of each of the charged voltages can be output to the electrically powered transmissions 8 and 9. Therefore, the voltage stored in each of the accumulator elements 51 a to 51 c can be lowered, obviating the use of accumulator elements having a high withstand voltage. Furthermore, a voltage that is the sum of the voltages of the accumulator elements 51 a to 51 c can be utilized by the electrically powered transmissions 8 and 9 and other electrical device devices. The optimum voltage can accordingly be obtained by setting the number of accumulator elements in accordance with the voltage used by the electrical devices. However, minor variations in the characteristics of the accumulator elements 51 a to 51 c may cause the voltage able to be stored therein to fluctuate to a certain extent.

The voltage supplied to the power supply 14 can decrease when the bicycle is running at low speed or the headlight 41 and the tail-light 42 are illuminated at night. When the supplied voltage decreases and the voltage detection part 53 detects a voltage below the prescribed level, the switch control part 54 controls the connection switching part 52 into the second state, as shown in Figure 5. In the second state, the first and second switch elements 55a, 55b, 56a and 56b are turned on, the third switch elements 57a and 57b are turned off, and a parallel connection is established with the first through third accumulator elements 51 a to 51 c. When a parallel connection is established with the three accumulator elements 51 a to 51 c, the current flows as shown by the arrows in Figure 5, and each of the accumulator elements 51 a to 51 c can be charged even with the voltage that is a third (since there are three accumulator elements) of the voltage supplied when a serial connection is established.

In other words, a parallel connection enables each of the accumulator elements 51 a to 51 c to be reliably charged, even when only a small amount of electrical power is supplied by the hub dynamo 10 when the headlight 41 and the tail-light 42 are used during low-speed travel, at night, or other similar situations. Conversely, a serial connection enables each of the accumulator elements 51a to 51c to be reliably charged without requiring an overvoltage prevention circuit, even when a large amount of electrical power is supplied by the hub dynamo 10 during high-speed travel or other similar situation.

When charging and discharging are repeated in a serially connected state only, minor variations in the characteristics of each of the accumulator elements 51 a through 51 c can cause the accumulator voltage to gradually develop a bias. However, even in such cases, when a parallel connection has been established, the voltage for each accumulator element becomes even. It therefore becomes unnecessary to utilize a voltage monitoring circuit to monitor whether the withstand voltage of the accumulator elements is exceeded when the voltage develops a bias.

When the voltage supplied by the hub dynamo 10 reaches a prescribed level or higher, a serial connection is established with the plurality of accumulator elements 51 a to 51 c, and when the voltage is below the prescribed level a parallel connection is established with the accumulator elements. Therefore, taking the number of accumulator elements to be N, the connection state of the accumulator elements can be switched between the first and second states using a simple configuration wherein [(N-1) x 3] switch elements are provided to the connection switching part 52, and the switch elements are turned on and off by the switch control part 54. Charging can be accomplished at a low voltage using a parallel connection even if the supplied voltage drops. It is accordingly possible to obviate the use of a half wave voltage-doubling rectifier circuit for increasing the voltage. The accumulator elements can therefore be charged by a stable voltage even when the voltage supplied by the generator decreases, and charging using a stable voltage can be accomplished with a simple and compact structure.

Three accumulator elements are used in the above embodiment, but any number can be used as long as a plurality thereof is present. The number can be suitably determined depending upon the voltage rating of the electrical components, the withstand voltage of the accumulator elements, and other such factors. As a rule, using N as the number of accumulator elements (where N is an integer of 2 or greater), the connection switching part 52 can comprise (N-1) first switch elements, which are connected respectively to the first end 10a of the hub dynamo 10 and to the first ends of the first to (N-1)th accumulator elements; (N-1) second switch elements, which are connected respectively to the second end 10b of the hub dynamo 10, and to the second ends of the second to Nth accumulator elements; and (N-1) third switch elements, which are connected respectively to the first to the (N-1)th accumulator elements and to the second to the Nth accumulator elements. Therefore, (N-1) is the number of first through third switch elements, and the total number of first to third switch elements is three times that number.

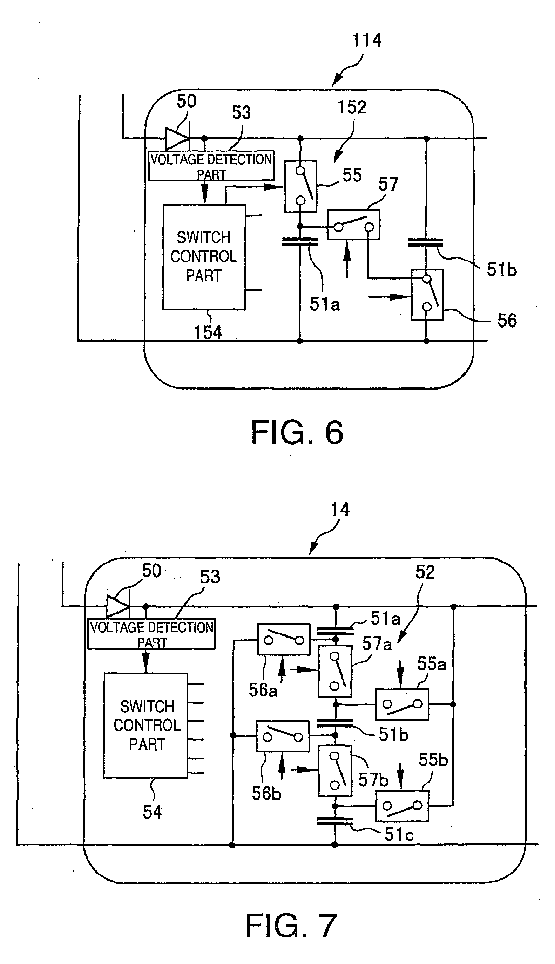

In Figure 6, two accumulator elements 51 a and 51 b constitute a power supply 114. A connection switching part 152 is composed of one each of first to third switch elements 55 to 57. When the supplied voltage is at or above a prescribed level, a switch control part 154 turns off the first and second switch elements 55 and 56, turns on the third switch element 57, enables the first state, and establishes a serial connection with the accumulator elements 51 a and 51 b. When the voltage does not reach the prescribed level, the first and second switch elements 55 and 56are turned on, the third switch element 57 is turned off, the second state is established, and a parallel connection is established with the accumulator elements 51 a and 51 b.

In the above embodiment, the three accumulator elements are shown connected in parallel with the first and second ends of the hub dynamo 10, but can also be connected serially, as in Figure 7. Figure 7 and Figure 3 show the same members and reference symbols, and substantially the same connection states; a serial connection is indicated merely for illustrative purposes.

An example is described in the above embodiment wherein power is supplied by a power supply to an electrically powered transmission, an electrically powered suspension, or another electrical device. However, the power supply is not limited to supplying electrical power to this electrical equipment, and may supply electrical power to a motor for driving the bicycle, a control apparatus therefore, and other such electrical devices.

Large-capacity capacitors are provided as an example of an accumulator element in the present embodiment; however, an electrolytic capacitor or another smaller-capacity capacitor may be used depending upon the electrical capacity to be supplied by the electrical device. A secondary cell able to be charged and discharged may also be used as the accumulator element.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle power supply comprising:
a first alternating-current connection;
a second alternating-current connection;
a plurality of accumulator elements (51 a, 51 b, 51 c) electrically connected between the first and second alternating-current connections to receive an alternating-current;
a connection switching part (52, 152) arranged to switch between a first state, in which the accumulator elements (51 a, 51 b, 51 c) are serially connected with respect to the first and second alternating-current connections, and a second state, in which the accumulator elements (51 a, 51 b, 51 c) are connected in parallel with respect to the first and second configured alternating-current connections;
a voltage detection part (53) arranged to detect voltage supplied to the bicycle power supply (14) via the first and second alternating-current connections; and
a switching control part (154), which controls the connection switching part (52, 152) to establish the first state when the voltage detected by the voltage detection part (53) is at a prescribed voltage or above, and which controls the connection switching part (52, 152) to establish the second state when the prescribed voltage is not reached.

2. The bicycle power supply according to claim 1, wherein
the accumulator elements includes first and second accumulator elements (51 a, 51 b) electrically connected between the first and second alternating-current connections,
the connection switching part (52, 152) includes
a first switch element (55a, 55b) connected to the first alternating-current connection and connected to a first end (51a1) of the first accumulator element (51a),
a second switch element (56a, 56b), connected to the second alternating-current connection and connected to a second end (51b2) of the second accumulator element (51 b), and
a third switch element (57a) connected to the first accumulator element (51 a) and the second accumulator element (51 b), and
the switching control part (52) is configured to switch the first and second switch elements (56a, 56b) off and the third switch element (57a) on to establish the first state, and configured to switch the first and second switch elements (55a, 56a) on and the third switch element (57a) off to establish the second state.

3. The bicycle power supply according to claim 1, wherein
the accumulator elements (51a, 51 b, 51 c) includes a plurality of accumulator elements electrically connected between the first and second alternating-current connections, with a total number of the accumulator elements being equal to N, where N is an integer of 3 or greater,
the connection switching part (52, 152) includes
a plurality of first switch elements (55a, 55b) connected to the first alternating-current connection and connected to first ends (51a1)of a first to an (N-1)th of the accumulator elements (51 a, 51 b, 51c), respectively,
a plurality of second switch elements (56a, 56b) connected to the second alternating-current connection and connected to second ends (51 b2) of a second to an Nth of the accumulator elements (51 a, 51 b, 51 c), respectively, and
a plurality of third switch elements (57a, 57b) connected separately to the first ends of the first to the (N-1)th of the accumulator elements (51 a, 51b, 51 c) and connected to the second ends (51 b2) of the second to the Nth of the accumulator elements (51 a, 51b, 51 c) with a total number of the third switch elements (57a, 57b) being N-1; and
the switching control part (52, 152) is configured to switch all of the first and second switch elements (55a, 55b, 56a, 56b) off and all of the third switch element (57a, 57b) on to establish the first state, and configured to switch all of the first and second switch elements (55a, 55b, 56a, 56b) on and all of the third switch element (57a, 57b) off to establish the second state.

4. The bicycle power supply according to claim 1, wherein
the accumulator elements (51 a, 51 b, 51 c) are capacitors.

5. A bicycle electrical system (11) equipped with the bicycle power supply according to claim 1, wherein
the bicycle electrical system (11) includes an alternating-current generator configured to be mounted to a bicycle, and an electrical device powered by electrical power received from the bicycle power supply.

6. The bicycle electrical system (11) according to claim 5, wherein
the electrical device includes an electrically powered transmission component (8, 9) for shifting gears of the bicycle.

7. The bicycle electrical system (11) according to claim 5, wherein
the electrical device includes an electrically powered suspension (13f, 13r) for the bicycle.

8. The bicycle electrical system (11) according to claim 5, further comprising
a bicycle lighting device connected to the alternating-current generator in parallel with the electrical device.
